# EUROPÄISCHE PATENTSCHRIFT

(11) **EP 2 989 943 B1**
(45) Veröffentlichungstag und Bekanntmachung des Hinweises auf die Patenterteilung: **08.07.2020**
(21) Anmeldenummer: 14183083.6
(22) Anmeldetag: 01.09.2014
(51) Int. Cl.: A47J 31/36, A47J 31/40

(54) **BRÜHVORRICHTUNG ZUM EXTRAHIEREN EINER PORTIONSKAPSEL**
BREWING DEVICE FOR EXTRACTING A PORTION CAPSULE
DISPOSITIF D'ÉBOUILLANTAGE POUR EXTRAIRE UNE CAPSULE

(43) Veröffentlichungstag der Anmeldung: 02.03.2016
(73) Patentinhaber: Eugster/Frismag AG, 8580 Amriswil (CH)
(72) Erfinder: Daniel, Fischer, 8590 Romanshorn (CH)
(74) Vertreter: Wolff, Felix

(56) Entgegenhaltungen:
- EP-A1- 2 961 296
- EP-A1- 2 996 520
- WO-A1-2005/092160
- WO-A1-2009/090201
- WO-A1-2012/020343
- WO-A2-2009/113035
- CN-A- 103 989 407
- DE-A1-102011 011 204

## Beschreibung

### Stand der Technik

Die vorliegende Erfindung betrifft eine Brühvorrichtung zum Extrahieren einer Portionskapsel aufweisend ein Aufnahmeelement und ein Verschlusselement, wobei das Aufnahmeelement eine Kavität zur Aufnahme der Portionskapsel aufweist und wobei das Aufnahmeelement und das Verschlusselement entlang einer Längsachse zwischen einer Ladestellung, in welcher das Aufnahmeelement und das Verschlusselement voneinander beabstandet sind, und einer Extraktionsstellung, in welcher die Kavität zur Bildung einer Brühkammer durch das Verschlusselement verschlossen ist, überführbar ist, wobei das Aufnahmeelement einen Ablaufkanal zum Ableiten von Flüssigkeit aus der Brühkammer aufweist, welcher in einem Bodenbereich der Kavität in die Kavität mündet,.

Eine solche Brühvorrichtung ist beispielsweise aus der Druckschrift DE 10 2011 011 204 A1 oder CN 103 989 407 A bekannt. Es handelt sich dabei um sogenannte Portionskapselmaschinen, die sich in jüngster Zeit wachsender Beliebtheit erfreuen, weil man mit ihnen in sehr einfacher, schneller und komfortabler Weise Getränke mit vorportionierten Portionskapseln herstellen kann. Beispielsweise können Kaffeegetränke mittels einzelner mit Kaffeegranulat gefüllter Portionskapseln hergestellt werden, ohne dass der Benutzer in Vorbereitung des Getränks in Kontakt mit Wasser oder mit Kaffeegranulat kommt.

Um ein Getränk zu erzeugen, wird zunächst eine neue Portionskapsel in die Brühvorrichtung eingelegt und durch Überführen des Verschlusselements oder des Aufnahmeelements von der Ladestellung in die Extraktionsstellung eine geschlossene Brühkammer gebildet. Beim Schließen der Brühkammer werden der Kapseldeckel und der Kapselboden der Portionskapsel jeweils perforiert. Anschließend wird heißes Wasser unter Druck durch den Kapseldeckel in die Portionskapsel eingeleitet, wodurch sich im Inneren der Portionskapsel das gewünschte Getränk bildet. Das Getränk verlässt die Portionskapsel durch den perforierten Kapselboden und wird über einen in die Brühkammer mündenden Ablaufkanal
in ein Trinkgefäß geleitet.

Bei der aus dem Stand der Technik bekannten Brühvorrichtung wird der Kapselboden im Mündungsbereich des Ablaufkanals nicht abgestützt. Beim Extrahieren des Getränks wird im Kapselinneren jedoch ein vergleichsweise hoher Druck erzeugt. Es besteht somit die Gefahr, dass der Kapselboden unter dem hohen Kapselinnendruck nachgibt und sich innerhalb des Mündungsbereichs in Richtung des Ablaufkanals auswölbt. Nachteiligerweise kann hierdurch die Brühvorrichtung beschädigt werden. Insbesondere wird einerseits der Ablaufkanal verschlossen, so dass das Getränk nicht abfließen kann, und andererseits verklemmt sich die Portionskapsel innerhalb der Brühkammer, wodurch die Portionskapsel nach Abschluss des Extraktionsvorgangs nicht mehr ohne weiteres entnommen werden kann.

### Offenbarung der Erfindung

Es war deshalb die Aufgabe der vorliegenden Erfindung, eine Brühvorrichtung zum Extrahieren einer Portionskapsel zur Verfügung zu stellen, bei welcher ein Ausbeulen des Kapselbodens im Mündungsbereich des Ablaufkanals verhindert wird.

Gelöst wird die Aufgabe mit einer Brühvorrichtung nach Anspruch 1.

Die erfindungsgemäße Brühvorrichtung hat gegenüber dem Stand der Technik den Vorteil, dass die Mündung des Ablaufkanals im Bodenbereich der Portionskapsel von der Wandung der Kavität beabstandet ist und somit der Randbereich des Kapselbodens während des Extraktionsvorgangs abgestützt wird. Hierdurch wird verhindert, dass sich der Kapselboden im Bereich der Mündung durch den während des Extraktionsvorgangs im Kapselinneren herrschenden Überdruck ausbeult bzw. auswölbt. Vorteilhafterweise wird somit auch ein Verstopfen des Ablaufkanals und ein Festklemmen der Portionskapsel in der Kavität wirksam vermieden. Ferner wäre es möglich, die Materialstärke des Kapselbodens zu verringern, da der Kapselboden weniger stabil ausgebildet sein muss. Da es sich bei Portionskapseln um ein tägliches Verbrauchsgut handelt, könnte hierdurch die Menge des anfallenden Kapselabfalls reduziert und somit die Umwelt geschont werden.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass entlang einer zur Längsachse senkrechten Querrichtung ein Abstand zwischen der Wandung und der Mündung des Ablaufkanals vorgesehen ist, welcher wenigstens 0,2 Millimeter, bevorzugt wenigstens 0,5 Millimeter und besonders bevorzugt im Wesentlichen 1 Millimeter umfasst. In vorteilhafter Weise wird somit zwischen der Wandung und der Mündung, d.h. im Bereich des Abstands eine Stützfläche zum Abstützen eines Kapselbodens der Portionskapsel in der Extraktionsstellung gebildet, wodurch das Ausbeulen bzw. Auswölben des Kapselbodens wirksam vermieden wird.

Erfindungsgemäß ist vorgesehen, dass im Zentrum des Bodenbereichs ein Perforationsmittel zum Perforieren des Kapselbodens angeordnet ist, wobei im Bodenbereich ein Ringkanal um das Perforationsmittel ausgebildet ist. Vorteilhafterweise wird der Kapselboden durch das Perforationsmittel automatisch perforiert, sobald die mit einer Portionskapsel befüllte Brühvorrichtung von der Ladestellung in die Extraktionsstellung überführt wird. Der Ringspalt sorgt dafür, dass sich das Getränk, welches durch die Perforationsöffnung und entlang des Perforationsmittels aus der Portionskapsel austritt sammeln und in Richtung des Ablaufkanals abfließen kann. Um das Abfließen zu begünstigen ist erfindungsgemäß vorgehen, dass im Bodenbereich ein radialer Kanal ausgebildet ist, welcher sich senkrecht zur Längsachse von dem Ringkanal zur Mündung des Ablaufkanals erstreckt. Denkbar ist, dass der radiale Kanal einen zur Mündung stetig abfallenden Kanalboden aufweist. Im Ringkanal sind vorzugsweise ferner eine Mehrzahl von radialer Rippen ausgebildet, welche radial um das Perforationsmittel verteilt angeordnet ist.

Gemäß einer weiteren bevorzugten Ausführungsform der vorliegenden Erfindung ist vorgesehen, dass das Perforationsmittel eine pyramidenförmige Perforationsspitze aufweist. In vorteilhafter Weise wird beim Anstechen des Kapselbodens somit eine möglichst große Perforationsöffnung erzeugt. In den Mantelflächen der pyramidenförmigen Perforationsspitze sind vorzugsweise jeweils nutenförmige Kanäle ausgebildet, durch welche das Getränk aus der Portionskapsel in den Ringspalt abfließt und von dem Ringspalt durch den radialen Kanal in den Ablaufkanal gelangt.

Gemäß einer weiteren bevorzugten Ausführungsform der vorliegenden Erfindung ist vorgesehen, dass der Bodenbereich in Richtung seines Zentrums konvex gewölbt ist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

- Figuren 1a bis 1e: zeigen schematische Schnittbildansichten einer Brühvorrichtung gemäß einer beispielhaften Ausführungsform der vorliegenden Erfindung.
- Figuren 2a und 2b: zeigen schematische Detailansichten des Aufnahmeelements der Brühvorrichtung gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

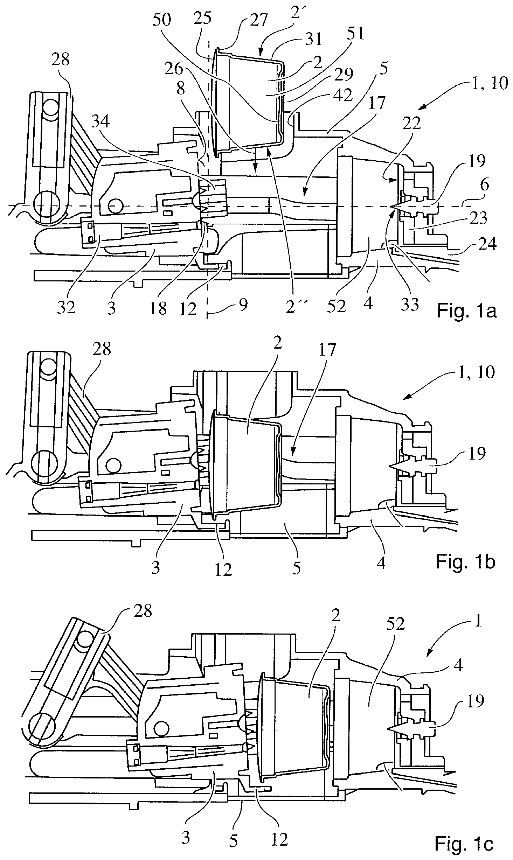

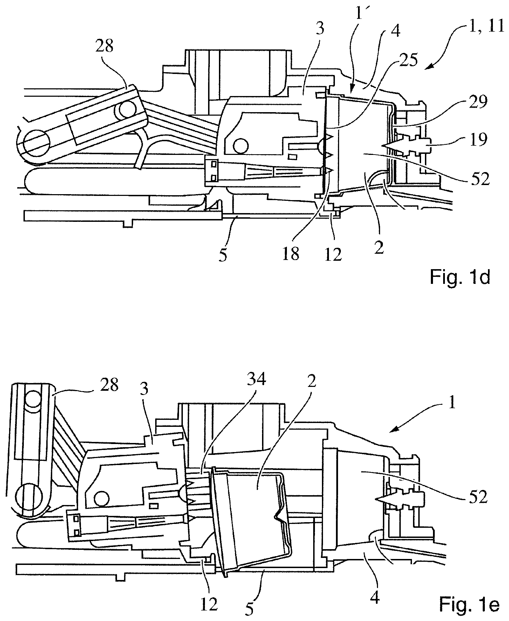

In **Figuren 1a bis 1e** sind schematische Schnittbildansichten einer Brühvorrichtung 5 zur Herstellung eines Getränks gemäß einer beispielhaften Ausführungsform der vorliegenden Erfindung dargestellt. Die Brühvorrichtung 5 ist dabei Teil eines Systems 1 umfassend die Brühvorrichtung 5 und eine Portionskapsel 2. Die Brühvorrichtung 5 umfasst dabei ein als Glockenelement ausgebildetes Aufnahmeelement 4 und ein Verschlusselement 3. Das Verschlusselement 3 ist relativ zum Aufnahmeelement 4 entlang einer axialen Richtung 6 (auch als Längsachse 6 bezeichnet) zwischen einer in Figuren 1a und 1b illustrierten Ladestellung 10 und einer in Figur 1d illustrierten Extraktionsstellung 11 bewegbar. Das Aufnahmeelement 4 weist eine Kavität 52 auf. In der Extraktionsstellung ist die Portionskapsel 2 größtenteils innerhalb der Kavität 52 angeordnet und die Kavität 52 mittels des Verschlusselements 3 geschlossen, so dass das Aufnahmeelement 4 und das Verschlusselement 3 eine hermetisch geschlossene Brühkammer 1' bilden (Vgl. Figur 1d).

Die Portionskapsel 2 umfasst einen aus Kunststoff gefertigten und topfförmig ausgebildeten Kegelstumpf 31. Der Kegelstumpf 31 wird mittels eines aus Kunststoff- oder Aluminiumfolie gefertigten Kapseldeckels 25 luftdicht verschlossen. Innerhalb der Portionskapsel 2 befindet sich ein Getränkerohmaterial 51, insbesondere ein mittels einer Extrahierflüssigkeit extrahierbares granulatförmig ausgebildetes Röstkaffeepulver. Die Portionskapsel 2 weist ein Filterelement 50 auf, welches zwischen dem Kapselboden 29 und dem Getränkerohmaterial 51 angeordnet ist. Das Filterelement 50 umfasst vorzugsweise ein weiches Vliesmaterial, welches im Randbereich an den Kapselboden 29 (auch als Bodenabschnitt der Portionskapsel 2 bezeichnet) gesiegelt bzw. ultraschallverschweißt ist. Das Filterelement 50 sorgt dafür, dass beim Extrahieren der Portionskapsel 2 keine Partikel des Getränkerohmaterials 51 aus der Portionskapsel 2 in das herzustellende Getränk gelangt. Der Kapseldeckel 25 ist im Bereich eines Kapselflansches 27 mit dem Kegelstumpf 31 verklebt oder verschweißt. Der Kegelstumpf 31 ist aus einem tiefgezogenen Kunststoffmaterial hergestellt.

Das Verschlusselement 3 weist auf einer dem Aufnahmeelement 4 zugewandten Endfläche 8 eine Mehrzahl von ersten Perforationsmitteln 18 auf. Die ersten Perforationsmittel 18 umfassen jeweils eine Perforationsspitze, welche in Richtung des Aufnahmeelements 4 von der Endfläche 8 abstehen. Ferner sind in der Endfläche 8 Wasseraustrittsöffnungen ausgebildet (aus perspektivischen Gründen in den Figuren 1a bis 1e nicht zu erkennen). Das Verschlusselement 3 weist ferner einen Wasserzuführkanal 32 auf, welcher zur Zuleitung von Extraktionsflüssigkeit an die Wasseraustrittsöffnungen vorgesehen ist. Das Verschlusselement 3 weist zwei seitliche Halteärmchen 34 auf, deren freien Enden einander zugewandt sind und den Kapselflansch 27 seitlich umfassen.

Das Aufnahmeelement 4 weist ein zweites Perforationsmittel 19 auf, welches eine in Richtung des Verschlusselements 4 weisende Aufstechspitze umfasst, die innerhalb der Kavität 52 angeordnet ist. Die Aufstechspitze ist pyramidenförmig ausgebildet und weist auf ihren Mantelflächen nutenförmige Kanäle 33 auf. In den Bodenbereich 57 der Kavität 52 mündet ein Ablaufkanal 24, welcher das hergestellte Getränk aus der Brühkammer 1' zu einem Trinkgefäß leitet.

In **Figur 1a** ist das Verschlusselement 3 in der Ladestellung 10 illustriert, d.h. das Verschlusselement 3 ist entlang der axialen Richtung 6 von dem Aufnahmeelement 4 beabstandet. In dieser Ausgangsposition wird nun entlang einer Laderichtung 26 die Portionskapsel 2 durch einen nicht abgebildeten Benutzer in einen Einführschacht eingeführt, so dass die Portionskapsel 2 unter Schwerkrafteinwirkung in einen Zwischenbereich zwischen das Verschlusselement 3 und das Aufnahmeelement 4 fällt.

In **Figur 1b** ist illustriert, dass die Portionskapsel 2 im Zwischenbereich auf einen Kapselanschlag 12 stößt und dort aufliegt. Gleichzeitig wird durch die seitlichen Halteärmchen 35 ein Kippen der Portionskapsel 2 in Richtung des Aufnahmeelements 4 verhindert, indem der Kapselflansch 27 in Richtung des Aufnahmeelements 4 an den Halteärmchen 34 abgestützt wird, so dass die Portionskapsel 2 im Wesentlichen axial entlang der axialen Richtung 6 ausgerichtet ist.

Im nächsten Schritt, illustriert anhand der **Figur 1c** wird das Verschlusselement 3 über ein Kniehebelgelenk 28 zu einer linearen Verschiebung entlang der axialen Richtung 6 in Richtung des Aufnahmeelements 4 angetrieben. Alternativ wäre auch denkbar, dass Verschlusselement 3 motorisch zu bewegen. Durch die Bewegung des Verschlusselements 3 in Richtung des Aufnahmeelements 4 wird die Portionskapsel 2 in die Kavität 52 des Aufnahmeelements 21 eingeführt.

In **Figur 1d** ist das Verschlusselement 3 bis zum Aufnahmeelement 4 entlang der axialen Richtung 6 in die Extraktionsstellung 11 verschoben, so dass die Portionskapsel 2 nahezu vollständig in die Kavität 52 des hohlen Glockenelement 21 eingeführt ist. Der Kapseldeckel 25 ist dabei durch die als Perforationsspitzen ausgebildeten ersten Perforationsmittel 18 perforiert worden, während der Kapselboden 29 durch das als Aufstechdorn ausgebildete zweite Perforationsmittel 19 perforiert worden ist. Das erste und das zweite Verschlusselement 3, 4 bilden nun eine hermetisch geschlossene Brühkammer 1', in welcher die Portionskapsel 2 angeordnet ist. Der Kapselflansch 27 ist dabei zwischen dem ersten und dem zweiten Verschlusselement 3, 4 insbesondere mittels eines elastischen Dichtrings 36 fest eingeklemmt. Der Kapselanschlag 12 ist dabei unterhalb des Aufnahmeelements 4 angeordnet.

Nach dem Schließen der Brühkammer 1' wird eine Pumpe (nicht abgebildet) zum Fördern von Extraktionsflüssigkeit eingeschaltet, wodurch der Brühkammer 1' die Extraktionsflüssigkeit in Form von druckbeaufschlagtem und erhitztem Wasser zugeführt wird. Die Extraktionsflüssigkeit wird dabei mittels der Pumpe durch den Wasserzuführkanal 32 zu den Wasseraustrittsöffnungen gefördert und gelangt von dort durch die mittels der ersten Perforationsmittel 18 erzeugten Perforationsöffnungen im Kapseldeckel 25 in die Portionskapsel 2. Das Getränkerohmaterial wird von der Extraktionsflüssigkeit durchströmt, so dass sich ein Getränkeextrakt bildet, welcher die Portionskapsel 2 durch das mittels des zweiten Perforationsmittels 19 im Kapselboden 29 erzeugte Perforationsloch wieder verlässt und anschließend in den Ablaufkanal 24 gelangt. Mittels des Ablaufkanals 24 wird der Getränkeextrakt vorzugsweise direkt einem nicht abgebildeten Trinkgefäß, wie beispielsweise einer Kaffeetasse, zugeführt. Das Getränk wird mittels des Filterelements 50 gefiltert, so dass keine Partikel des Getränkerohmaterials in das Getränk und insbesondere in das Trinkgefäß gelangt.

Nach dem Extraktionsvorgang wird das Verschlusselement 3, wie in **Figur 1e** illustriert, von der Extraktionsstellung 11 wieder zurück in Richtung der Ladestellung 10 bewegt. Die extrahierte Portionskapsel 2 wird dabei mittels der Halteärmchen 34 wieder aus dem Hohlraum des Aufnahmeelements 4 herausgezogen und in Richtung der Ladestellung 10 transportiert. Durch das Zurückfahren des Verschlusselements 3 stößt der Kapselflansch 27 an eine dem Aufnahmeelement 4 zugewandte Anschlagsfläche eines Kapselauswerfers. Die verbrauchte Portionskapsel 2 fällt hierdurch unter Schwerkrafteinwirkung in einen unterhalb des Zwischenbereichs angeordneten Auffangbehälter (nicht gezeigt). Anschließend befindet sich das Verschlusselement 3 wieder in der Ladeposition 10, so dass eine erneute Befüllung der Brühvorrichtung 1 mit einer unverbrauchten Portionskapsel 2 gemäß Figur 1a möglich ist.

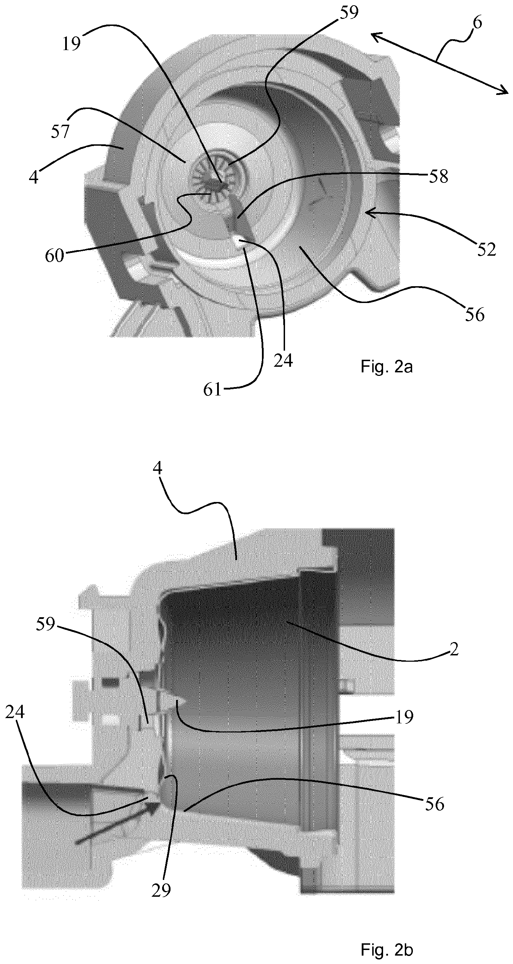

In **Figuren 2a und 2b** sind schematische Detailansichten des Aufnahmeelements 4 der Brühvorrichtung 5 gemäß der beispielhaften Ausführungsform der vorliegenden Erfindung illustriert.

In den Detailansichten ist zu erkennen, dass um das zweite Perforationsmittel 19 ein Ringkanal 59 im Bodenbereich 57 der Kavität 52 ausgebildet ist. Im Ringkanal 59 ist eine Mehrzahl von radialen Rippen 60 ausgebildet, welcher punktsymmetrisch um das zweite Perforationsmittel 19 angeordnet sind. Von dem Ringkanal 59 erstreckt sich senkrecht zur Längsachse 6 ein radialer Kanal 58 zur Mündung des Ablaufkanals 24. Der radiale Kanal 58 weist dabei einen abfallenden Kanalboden 61 auf. Die Mündung des Ablaufkanals 24 ist senkrecht zur Längsachse 6 von der angrenzenden Wandung 56 der Kavität 52 beabstandet. Hierdurch entsteht zwischen der Mündung des Ablaufkanal 24 und der Wandung 56 eine Stützfläche 61, welche während des Extraktionsvorgangs den Rand des Kapselbodens der Portionskapsel 2 abstützt und somit ein Ausbeulen oder Auswölben des Kapselbodens in den Mündungsbereich des Ablaufkanals 24 aufgrund des im Kapselinneren herrschenden Überdrucks verhindert. Der Abstand zwischen der Mündung des Ablaufkanals 24 und der Wandung 56 bzw. die Breite der Stützfläche 61 betragen vorzugsweise 1 Millimeter. Der Bodenbereich 57 der Kavität 52 ist insbesondere derart ausgebildet, dass er in radialer Richtung von der Wandung 56 bis zum Ringkanal 59 ansteigt und somit zumindest teilweise konvex ausgebildet ist.

### BEZUGSZEICHENLISTE

- 1: System
- 1': Brühkammer
- 2: Portionskapsel
- 2', 2": Erster und zweiter Außenbereich
- 3: Verschlusselement
- 4: Aufnahmeelement
- 5: Brühvorrichtung
- 8: Endfläche
- 10: Ladestellung
- 11: Extraktionsstellung
- 12: Kapselanschlag
- 18: Erstes Perforationsmittel
- 19: Zweites Perforationsmittel
- 22: Bodenbereich
- 23: Vertiefung
- 24: Ablaufkanal
- 25: Kapseldeckel
- 26: Laderichtung
- 27: Kapselflansch
- 28: Kniehebelgelenk
- 29: Kapselboden
- 31: Kegelstumpf
- 32: Wasserzuführkanal
- 33: Nut
- 34: Halteärmchen
- 42: Einführschacht
- 50: Filterelement
- 51: Getränkerohmaterial
- 52: Kavität
- 56: Wandung
- 57: Bodenbereich
- 58: Radialer Kanal
- 59: Ringkanal
- 60: Rippen
- 61: Stützfläche

## Patentansprüche

1. Brühvorrichtung (5) zum Extrahieren einer Portionskapsel (2) aufweisend ein Aufnahmeelement (4) und ein Verschlusselement (3), wobei das Aufnahmeelement (4) eine Kavität (52) zur Aufnahme der Portionskapsel (2) aufweist und wobei das Aufnahmeelement (4) und das Verschlusselement (3) entlang einer Längsachse (6) zwischen einer Ladestellung (10), in welcher das Aufnahmeelement (4) und das Verschlusselement (3) voneinander beabstandet sind, und einer Extraktionsstellung (11), in welcher die Kavität zur Bildung einer Brühkammer (1') durch das Verschlusselement (3) verschlossen ist, überführbar ist, wobei das Aufnahmeelement (4) einen Ablaufkanal (24) zum Ableiten von Flüssigkeit aus der Brühkammer (5) aufweist, welcher in einem Bodenbereich (57) der Kavität (52) in die Kavität (52) mündet, **dadurch gekennzeichnet, dass** die Mündung des Ablaufkanals (24) von einer an den Bodenbereich (57) angrenzenden Wandung (56) der Kavität (52) beabstandet ist, wobei im Zentrum des Bodenbereichs (57) ein Perforationsmittel (19) zum Perforieren des Kapselbodens angeordnet ist, wobei im Bodenbereich (57) ein Ringkanal (59) um das Perforationsmittel (19) ausgebildet ist, wobei im Bodenbereich (57) ein radialer Kanal (58) ausgebildet ist, welcher sich senkrecht zur Längsachse (6) von dem Ringkanal (59) zur Mündung des Ablaufkanals (24) erstreckt..

2. Brühvorrichtung (5) nach Anspruch 1, wobei entlang einer zur Längsachse (6) senkrechten Querrichtung ein Abstand zwischen der Wandung (56) und der Mündung des Ablaufkanals (24) vorgesehen ist, welcher wenigstens 0,2 Millimeter, bevorzugt wenigstens 0,5 Millimeter und besonders bevorzugt im Wesentlichen 1 Millimeter umfasst.

3. Brühvorrichtung (5) nach Anspruch 2, wobei im Bereich des Abstands (60) eine Stützfläche (61) zum Abstützen eines Kapselbodens der Portionskapsel (2) in der Extraktionsstellung (11) ausgebildet ist.

4. Brühvorrichtung (5) nach einem der vorhergehenden Ansprüche, wobei der radiale Kanal (58) einen zur Mündung stetig abfallenden Kanalboden aufweist.

5. Brühvorrichtung (5) nach einem der vorhergehenden Ansprüche, wobei im Ringkanal (59) eine Mehrzahl von radialer Rippen (60) ausgebildet sind, welche radial um das Perforationsmittel (19) verteilt angeordnet ist.

6. Brühvorrichtung (5) nach einem der vorhergehenden Ansprüche, wobei das Perforationsmittel (19) eine pyramidenförmige Perforationsspitze aufweist.

7. Brühvorrichtung (5) nach Anspruch 6, wobei in den Mantelflächen der pyramidenförmigen Perforationsspitze jeweils nutenförmige Kanäle (33) ausgebildet sind.

8. Brühvorrichtung (5) nach einem der vorhergehenden Ansprüche, wobei der Bodenbereich (57) in Richtung seines Zentrums konvex gewölbt ist.

## Claims

1. Brewing device (5) for extracting from a portion capsule (2), having a receiving element (4) and a closure element (3), wherein the receiving element (4) has a cavity (52) for receiving the portion capsule (2) and wherein the receiving element (4) and the closure element (3) are transferable along a longitudinal axis (6) between a loading position (10), in which the receiving element (4) and the closure element (3) are spaced apart from one another, and an extraction position (11), in which the cavity is closed by the closure element (3) so as to form a brewing chamber (1'), wherein the receiving element (4) has an outlet channel (24) for discharging liquid from the brewing chamber (5), said outlet channel (24) leading into the cavity (52) in a bottom region (57) of the cavity (52), **characterized in that** the mouth of the outlet channel (24) is spaced apart from a wall (56), adjoining the bottom region (57), of the cavity (52), wherein a perforation means (19) for perforating the capsule bottom is arranged in the centre of the bottom region (57), wherein an annular channel (59) is formed around the perforation means (19) in the bottom region (57), wherein a radial channel (58) is formed in the bottom region (57), said radial channel (58) extending perpendicularly to the longitudinal axis (6) from the annular channel (59) to the mouth of the outlet channel (24) .

2. Brewing device (5) according to Claim 1, wherein, along a transverse direction perpendicular to the longitudinal axis (6), there is a gap between the wall (56) and the mouth of the outlet channel (24), said gap measuring at least 0.2 millimetres, preferably at least 0.5 millimetres and particularly preferably substantially 1 millimetre.

3. Brewing device (5) according to Claim 2, wherein a supporting surface (61) for supporting a capsule bottom of the portion capsule (2) in the extraction position (11) is formed in the region of the gap (60).

4. Brewing device (5) according to one of the preceding claims, wherein the radial channel (58) has a channel bottom that slopes downward steadily as far as the mouth.

5. Brewing device (5) according to one of the preceding claims, wherein a plurality of radial ribs (60) are formed in the annular channel (59), said ribs (60) being arranged in a manner distributed radially around the perforation means (19).

6. Brewing device (5) according to one of the preceding claims, wherein the perforation means (19) has a pyramid-shaped perforation spike.

7. Brewing device (5) according to Claim 6, wherein groove-like channels (33) are formed in each case in the lateral surfaces of the pyramid-shaped perforation spike.

8. Brewing device (5) according to one of the preceding claims, wherein the bottom region (57) is convexly curved in the direction of its centre.

## Revendications

1. Dispositif d'ébouillantage (5) pour extraire une capsule (2), comprenant un élément de réception (4) et un élément de fermeture (3), l'élément de réception (4) comprenant une cavité (52) pour recevoir la capsule (2) et l'élément de réception (4) et l'élément de fermeture (3) étant transférables le long d'un axe longitudinal (6) entre une position de chargement (10), à laquelle l'élément de réception (4) et l'élément de fermeture (3) sont espacés l'un de l'autre, et une position d'extraction (11), à laquelle la cavité est fermée par l'élément de fermeture (3) pour former une chambre d'ébouillantage (1'), l'élément de réception (4) comprenant un canal de déchargement (24) pour évacuer un liquide hors de la chambre d'ébouillantage (5), qui débouche dans la cavité (52) dans une zone de fond (57) de la cavité (52), **caractérisé en ce que** l'embouchure du canal de déchargement (24) est espacée d'une paroi (56) de la cavité (52) adjacente à la zone de fond (57), un moyen de perforation (19) pour perforer le fond de la capsule étant agencé au centre de la zone de fond (57), un canal annulaire (59) étant formé dans la zone de fond (57) autour du moyen de perforation (19), un canal radial (58) étant formé dans la zone de fond (57), qui s'étend perpendiculairement à l'axe longitudinal (6) depuis le canal annulaire (59) jusqu'à l'embouchure du canal de déchargement (24).

2. Dispositif d'ébouillantage (5) selon la revendication 1, dans lequel un écart est prévu le long d'une direction transversale perpendiculaire à l'axe longitudinal (6) entre la paroi (56) et l'embouchure du canal de déchargement (24), qui comprend au moins 0,2 millimètre, de préférence au moins 0,5 millimètre et de manière particulièrement préférée essentiellement 1 millimètre.

3. Dispositif d'ébouillantage (5) selon la revendication 2, dans lequel une surface support (61) pour supporter un fond de capsule de la capsule (2) dans la position d'extraction (11) est formée dans la zone de l'écart (60).

4. Dispositif d'ébouillantage (5) selon l'une quelconque des revendications précédentes, dans lequel le canal radial (58) comprend un fond de canal qui baisse de manière continue vers l'embouchure.

5. Dispositif d'ébouillantage (5) selon l'une quelconque des revendications précédentes, dans lequel une pluralité de nervures radiales (60) sont formées dans le canal annulaire (59), qui sont réparties radialement autour du moyen de perforation (19).

6. Dispositif d'ébouillantage (5) selon l'une quelconque des revendications précédentes, dans lequel le moyen de perforation (19) comprend une pointe de perforation pyramidale.

7. Dispositif d'ébouillantage (5) selon la revendication 6, dans lequel des canaux en forme de rainures (33) sont formés à chaque fois dans les surfaces d'enveloppe de la pointe de perforation pyramidale.

8. Dispositif d'ébouillantage (5) selon l'une quelconque des revendications précédentes, dans lequel la zone de fond (57) est incurvée de manière convexe dans la direction de son centre.
